(19) Europäisches Patentamt
European Patent Office
Office européen des brevets

(11) **EP 2 698 598 B1**

(12) **EUROPEAN PATENT SPECIFICATION**

(45) Date of publication and mention
of the grant of the patent:
**02.12.2015 Bulletin 2015/49**

(51) Int Cl.:
*G01B 11/26* (2006.01)    *G01N 21/21* (2006.01)

(21) Application number: **13189966.8**

(22) Date of filing: **23.10.2006**

(54) **System and method for setting and compensating errors in AOI and POI of a beam of EM radiation**

System und Verfahren zur Einstellung und Kompensation von Fehlern bei AOI und POI eines Strahls von EM-Strahlung

Système et procédé de réglage et de compensation d'erreurs dans AOI et POI d'un faisceau de rayonnement EM

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**19.02.2014 Bulletin 2014/08**

(62) Document number(s) of the earlier application(s) in accordance with Art. 76 EPC:
**06817274.1 / 2 111 529**

(73) Proprietor: **J.A. Woollam Co., Inc.**
**Lincoln, NE 68508 (US)**

(72) Inventors:
• **Goeden, Chris**
  **Lincoln, NE 68507 (US)**
• **Johs, Blaine**
  **Lincoln, NE 68521 (US)**
• **Liphardt, Martin**
  **Lincoln, NE 68523 (US)**
• **Pfeiffer, Galen**
  **Lincoln, NE 68521 (US)**

(74) Representative: **Beck Greener**
**Fulwood House**
**12 Fulwood Place**
**London WC1V 6HR (GB)**

(56) References cited:
**EP-B1- 1 034 413     US-A- 3 880 524**
**US-A- 6 091 499**

**Description**

TECHNICAL FIELD

The disclosed invention relates to a method for identifying the angle (AOI) and plane (POI) of incidence of a beam of electromagnetic radiation with respect to a sample surface, and more particularly to methodology for setting an (AOI) and/or (POI) of a beam of electromagnetic radiation to an alignment sample, and/or compensating detected errors between intended and realized Angle-Of-Incidence (AOI) and Plane-Of-Incidence (POI) settings in ellipsometer and the like systems, during analysis of test sample characterizing data acquired at actually realized (AOI) and/or (POI) with respect to a sample surface. The method can also use data from alignment detector elements as sample characterizing data.

BACKGROUND

It is well known that the practice of Reflectometry, Spectrophotometry, Ellipsometry, Polarimetery and the like requires directing electromagnetic beams at samples at known angles (AOI) and planes (POI) of incidence. Typical practice is to set an angle (AOI) and/or plane (POI) of incidence by the directing of an electromagnetic beam and/or the orienting of a sample such that the desired angular relationships are achieved. This can be tedious and requiring of relatively expensive equipment, where high precision is desired. However precise knowledge of the (AOI) and/or (POI) are necessary for achieving accurate analysis of sample characterizing data, and errors between intended and actually achieved (AOI) and/or (POI) lead to errors in analysis.

While present invention methods can be applied in any material system investigation system such as Reflectometer, Spectrophotometer, Polarimeter and the like Systems, an important application is in Ellipsometer Systems, whether Monochromatic or Spectroscopic. It should therefore be understood that Ellipsometry involves acquisition of sample system characterizing data at single or at multiple Wavelengths, and at one or more Angle(s)-of-Incidence (AOI) of a Beam of Electromagnetic Radiation to a surface of the sample system. Ellipsometry is generally well described in a great many number of publications, one such publication being a review paper by Collins, titled "Automatic Rotating Element Ellipsometers: Calibration, Operation and Real-Time Applications", Rev. Sci. Instrum, 61(8) (1990).

A typical goal in ellipsometry is to obtain, for each wavelength in, and angle of incidence of a beam of electromagnetic radiation caused to interact with a sample system, sample system characterizing PSI and DELTA values, (where PSI is related to a change in a ratio of magnitudes of orthogonal components $r_p/r_s$ in said beam of electromagnetic radiation, and wherein DELTA is related to a phase shift entered between said orthogonal components $r_p$ and $r_s$, caused by interaction with said sample system:

$$\mathrm{TAN}(\psi)\ e^{(i\Delta)} = r_p/r_s$$

Continuing, Ellipsometer Systems generally include a source of a beam of electromagnetic radiation, a Polarizer, which serves to impose a known, (typically linear), state of polarization on a beam of electromagnetic radiation, a Stage for supporting a sample system, and an Analyzer which serves to select a polarization state in a beam of electromagnetic radiation after it has interacted with a sample system, and pass it to a Detector System for analysis therein. As well, one or more Compensator(s) can be present and serve to affect a phase retardance between orthogonal components of a polarized beam of electromagnetic radiation. A number of types of ellipsometer systems exist, such as those which include rotating elements and those which include modulation elements. Those including rotating elements include Rotating Polarizer (RP), Rotating Analyzer (RA) and Rotating Compensator (RC). While not limiting, a preferred embodiment is Rotating Compensator (RC) Ellipsometer Systems because they do not demonstrate "Dead-Spots" where obtaining ellipsometric data is difficult. They can read PSI and DELTA of a Material System over a full Range of Degrees with the only limitation being that if PSI becomes essentially zero (0.0), one can't then determine DELTA as there is not sufficient PSI Polar Vector Length to form the angle between the PSI Vector and an "X" axis. In comparison, Rotating Analyzer and Rotating Polarizer Ellipsometers have "Dead Spots" at DELTA's near 0.0 or 180 Degrees and Modulation Element Ellipsometers also have a "Dead Spot" at PSI near 45 Degrees). The utility of Rotating Compensator Ellipsometer Systems should then be apparent. Another benefit provided by Rotating Compensator Ellipsometer Systems is that the Polarizer (P) and Analyzer (A) positions are fixed during data acquisition, and that provides benefit in that polarization state sensitivity to input and output optics during data acquisition is essentially non-existent. This enables relatively easy use of optic fibers, mirrors, lenses etc. for input/output. For insight it is noted that a Patent to Johs, No. 5,872,630 describes a material system investigation system comprising a source of a polychromatic beam of electromagnetic radiation, a polarizer, a stage for supporting a sample system, an analyzer, a dispersive optics and at least one detector system which contains a multiplicity of detector elements, said material system investigation system optionally comprising at least one compensator(s) positioned at a location selected from the group consisting of:

before said stage for supporting a sample system, and

after said stage for supporting a sample system, and

both before and after said stage for supporting a sample system;

such that when said material system investigation system is used to investigate a sample system present on said stage for supporting a sample system, at least one of said compensator(s) is/are caused to continuously rotate while a polychromatic beam of electromagnetic radiation produced by said source of a polychromatic beam of electromagnetic radiation is caused to pass through said polarizer and said compensator(s), said polychromatic beam of electromagnetic radiation being also caused to interact with said sample system, pass through said analyzer and interact with said dispersive optics such that a multiplicity of essentially single wavelengths are caused to simultaneously enter a corresponding multiplicity of detector elements in said at least one detector system. Said 5,872,630 Patent to Johs is also disclosed as it shows use of a Beam Splitter to direct electromagnetic radiation into a Multi-element Alignment Detector (CH).

A Patent to Woollam et al, No. 5,582,646 is disclosed as it describes obtaining ellipsometric data through windows in a vacuum chamber, utilizing other than a Brewster Angle of Incidence and analysis of data in sensitive wavelength regions to enhance sensitivity.

Patent to Woollam et al, No. 5,373,359 is identified as it shows the presence of a Multi-Element Detector (24) applied to beam alignment in an Ellipsometer System.

Patent to Johs et al. No. 5,666,201 and Patent to Green et al., No. 5,521,706, and Patent to Johs et al., No. 5,504,582 are disclosed for general information as they pertain to Rotating Analyzer ellipsometer systems.

Patent to Bernoux et al., No. 5,329,357 is identified as it describes the use of optical fibers as input and output means in an ellipsometer system.

A Patent to Berger et al., No. 5,343,293 describes an Ellipsometer which comprises means to direct an electromagnetic beam onto a sample system.

A Patent to Canino, No. 4,672,196 describes a system which allows rotating a sample system to control the angle of incidence of a beam of electromagnetic radiation thereonto. Multiple detectors are present to receive the resulting reflected beams.

A Patent to Bjork et al., No. 4,647,207 describes an ellipsometer system in which reflecting elements are moved into the path of a beam of electromagnetic radiation.

Patent No. 5,412,473 to Rosencwaig et al., describes a ellipsometer system which simultaneously provides an electromagnetic beam at a sample surface at numerous angles of incidence thereto.

A European Patent, No. EP 1 034 413 B1 is disclosed as it describes a system for determining an angle of reflection an electromagnetic beam from a sample in an ellipsometer.

Patent to Hahn, No. 7,088,448 is also identified as it describes an approach to determining a the angle of incidence a beam of electromagentic radiation makes to a concave surface.

Patents identified in by the Examiner Examination of a parent Application are Nos.:

4,558,949 to Uehara et al.;
5,801,835 to Mizutani et al.;
5,166,516 to Kajimura;
6,292,259 to Fossey et al.;
4,585,348 to Chastang et al.;
6,969,863 to Foth;
4,902,900 to Kamiya et al.;
3,880,524 to Dill et al.
EP-1034413 by Hahn et al.

Even in view of the prior art, need remains a relatively inexpensive methodology which allows easily substantially setting desired (AOI) and/or (POI), wherein said method further enable detection of errors between intended and achieved (AOI) and/or (POI), said methodology then providing for correction of said errors during analysis of data acquired at actually realized, as opposed to intended (AOI) and (POI) settings. Said method can also utilize alignment detector output signals as sample characterizing data.

US6091499 describes a method and device for automatic relative adjustment of samples in relation to an ellipsometer. The device containing an ellipsometer having a first light source, a single sample position detection system and an adjusting device.

DISCLOSURE OF THE INVENTION

The present invention is as set out in the appended claims.

The present invention provides a method of characterizing a sample utilizing a beam of electromagnetic radiation, comprising the steps of:

a) providing an alignment sample (S), a source of electromagnetic radiation (LS), a multi-element alignment detector (AD) and a data detector (DET);

b) orienting the alignment sample such that at least a portion of a beam of electromagnetic radiation (LB) produced by said source is caused to obliquely impinge thereupon, reflect therefrom and enter the data detector at a base angle-of-incidence and plane-of-incidence;

c) causing a portion of the beam of electromagnetic radiation reflected from the alignment sample to enter said multi-element alignment detector, and monitoring signals from each element of said multi-element alignment detector;

d) removing said alignment sample and placing a test sample in its place;

e) obtaining data from said test sample by causing electromagnetic radiation from said source to reflect from said test sample and enter said data detector while monitoring the output of each element (Q1, Q2, Q3, Q4) in said multi-element alignment detector;

f) characterizing said test sample by analysing the data obtained from the data detector in step e), in combination with signals from elements of the multi-element alignment detector in step e) which identify differences from signals determined therefrom in step c), said difference signals serving to provide information to compensate offsets in intended and actually realized angle-of-incidence and plane-of-incidence of the test sample as compared to the base angle-of-incidence and plane-of-incidence of the alignment sample achieved in step b).

The disclosed invention results from the application of various combinations of Alignment and Data Detectors configured to allow use of Alignment Detector output signals to direct physical orienting of samples, and/or to compensate Data Detector output signals for deviations between intended and realized Angle-of-Incidence (AOI) and Plane-of-Incidence (POI) as regards a relationship between a Beam of Electromagnetic Radiation and a Surface of a Sample. As described below, the Alignment Detectors can comprise a central hole through which the Beam of Electromagnetic Radiation passes, enroute to interaction with a Sample, or after an interaction therewith, or can receive a portion of a Beam of Electromagnetic Radiation directed thereto by a Beam Splitter. The Beam can be directed into a Data Detector directly, or can be focused onto an end of an optical fiber which conveys Electromagnetic Radiation to a Data Detector.

In use, the disclosed invention applies signals from Multi-Element Alignment Detectors, (eg. Quad Detectors), in detection of actually achieved, as opposed to intended, Angle-of-Incidence (AOI) and Plane-of-Incidence (POI) alignment of beams of electromagnetic radiation, with respect to a Sample Surface. While signals developed by the Multi-Element Alignment Detectors in precision systems can be used to enable physical adjustment of the location and/or orientation of samples, and/or that of a source and detector of a beam electromagnetic radiation, which beam is caused to interact with a sample, the disclosed invention teaches utilization of signals from Multi-element Alignment Detectors which monitor incident and/or reflected beams of electromagnetic radiation, to provide information about errors between intended and actually achieved (AOI) and/or (POI). Said information can then be utilized to enable compensation of identified errors between intended and realized (AOI) and/or (POI) during analysis of data provided by a Data Detector. While not abandoning the practice of physical Sample orientation adjustment, the present invention teaches applying data which identifies actually achieved and known (AOI) and/or (POI) values to compensate Sample characterizing data, and therefore does not require expensive systems which are capable of precisely physically setting intended (AOI) and/or (POI) to intended values.

Some embodiments of the disclosed methods described herein utilize beam splitters to provide a portion of an electromagnetic beam to the multi-element alignment detector, with the remainder of the electromagnetic beam being directed toward and detected by at least one data detector, again, possibly via an optical fiber. In other embodiments a multi-element detector provides a hole through which a beam of electromagnetic radiation passes in use.

It is also noted that where a sample is aligned so that exactly the intended (AOI) and (POI) are achieved, rotating of the sample about an axis perpendicular to the surface thereof, (eg. Generalized Ellipsometry), as might be done to investigate anisotropy in a sample can result in achieving other than the intended (AOI) and/or (POI) at various rotation positions. Readjustment of the (AOI)/(POI) at each rotation setting is typically not practical, but the disclosed invention correction procedure to compensate the (AOI) and/or (POI) at various rotation settings during data analysis can be relatively easily implemented. In light of the foregoing it is noted that where a complete 360 degree rotation of a sample about the axis perpendicular to the surface thereof can provide data which is zone averaged to aid with compensating differences in (POI) at different rotation settings, such an approach to compensating (AOI), which can vary at each rotation setting, is not applicable.

The method can further comprise using signals developed by one or more alignment detector elements as sample characterizing data along with, or in place of that provided by the data detector.

Said method can further comprise the steps of:

a') providing a second source of a beam of electromagnetic radiation positioned above said sample, and a second multiple element alignment detector which provides a substantially centrally located hole therein, each element of said second multiple element alignment detector being positioned to receive substantially equal amounts of a beam of electromagnetic radiation provided by said second source thereof after passing through said substantially centrally located hole and reflecting from said sample when it is oriented perpendicular to said beam of electromagnetic radiation;

b') causing said second source of electromagnetic radiation to provide a beam of electromagnetic radiation which is directed toward said substantially centrally located hole; and

c') monitoring reflected electromagnetic radiation from said sample which enters each element of said multiple element alignment detector and adjusting the orientation of said sample until said multiple elements detect approximately amounts of electromagnetic radiation, and/or utilizing said signals developed by the elements of the multielement detector to compensate differences in intended and actually realized angle-of-incidence and plane-of-incidence of the test sample as compared to the base angle-of-incidence and plane-of-incidence of the alignment sample in step b.

In the foregoing recited methods, typically the portion of the beam of electromagnetic radiation reflected from the sample and caused to enter the multi-element detector in step c is produced by a beam splitter, and the signals developed by each of the elements of the multi-element detector in step c are caused to be equal at desired angle-of-incidence (AOI) and plane-of-incidence (POI) conditions.

The method can further comprise the steps of:

c) causing a portion of the beam of electromagnetic radiation reflected from the alignment sample to enter a multi-element alignment detector, and positioning said multi-element alignment detector so that known signals can be developed by each of its elements;

d) while changing the orientation of said alignment sample through a multiplicity of known angle-of-incidence and plane-of-incidence combinations, obtaining a data set which corresponds to signals from each from said multi-element detector element;

e) removing said alignment sample and placing a test sample in its place and orienting it generally as was the alignment sample in step b;

f) obtaining data from said test sample by causing electromagnetic radiation from said source to reflect from said test sample and enter said data detector;

g) characterizing said test sample by analyzing the data obtained from the detector in step f, in combination with correction parameters based on signals from the elements of the multi-element alignment detector which identify what angle-of-incidence and plane-of-incidence combination actually characterizes the test sample orientation, said correction parameters being based on data determined in step d.

Said method can involve a portion of the beam of electromagnetic radiation reflected from the sample being caused to enter the multi-element alignment detector in step c via beam splitter.

Said method can involve using signals developed by each of the elements of said multi-element alignment detector to physically effect desired (AOI) and (POI) orientation of the sample.

Said method can further comprise using signals developed by one or more alignment detector elements as sample characterizing data, along with or in place of that provided by the data detector.

Said method can further comprise the steps of:

a') providing a second source of a beam of electromagnetic radiation positioned above said sample, and a second multiple element alignment detector, each element of said second multiple element alignment detector being positioned to receive substantially equal amounts of a beam of electromagnetic radiation provided by said second source thereof after reflecting from said alignment sample when it is oriented perpendicular to said beam of electromagnetic radiation;

b') causing said second source of electromagnetic radiation to provide a beam of electromagnetic radiation which is directed toward said alignment sample; and

c') while changing the orientation of said alignment sample through a multiplicity of known angle-of-incidence and plane-of-incidence combinations, obtaining a data set which corresponds to signals from each from said multi-element alignment detectors;

It is noted that the alignment detector associated with said second source of electromagnetism can have a centrally oriented hole therein through which said beam of electromagnetic radiation from said second source passes before impinging on said alignment sample, or said alignment detector can receive electromagentic radiation from a beam splitted which directs a part of the beam of electromagnetic radiation from said second source thereinto which the remainder thereof passes impinges on said alignment sample.

Note, the "data sets" provided by output from a multi-element alignment detector just identified can comprise signal intensities from each element thereof in identified correspondence with alignment sample angle-of-incidence and plane-of-incidence combinations. An example Data Set might appear as:

| FOR A FIRST SET (AOI) AND (POI) | |
|---|---|
| OUTPUT FROM ALIGNMENT | CORRESPONDING ACTUALAOI & POIDETECTOR ELEMENTS |
| ELEMENT 1 INTENSITY | |
| ELEMENT 2 INTENSITY | (AOI) = YYY.YY DEGREES |
| ELEMENT 3 INTENSITY | (POI) = XXX.XX DEGREES |
| ELEMENT 4 INTENSITY | |
| ELEMENT N INTENSITY | |

| FOR A SECOND SET (AOI) AND (POI) | |
|---|---|
| OUTPUT FROM ALIGNMENT | CORRESPONDING ACTUALAOI & POIDETECTOR ELEMENTS |
| ELEMENT 1 INTENSITY | |
| ELEMENT 2 INTENSITY | (AOI) = YYY.YY DEGREES |
| ELEMENT 3 INTENSITY | (POI) = XXX.XX DEGREES |
| ELEMENT 4 INTENSITY | |
| ELEMENT N INTENSITY | |
| ETC. | |

said data set having a multiplicity of additional similar known angle-of-incidence and plane-of-incidence setting combinations as set in Step e in the just preceding example, and corresponding actual (AOI) and (POI) values.

It is also mentioned that use of the terminology "above" is not meant to limit the invention to the case wherein a second source of a beam of electromagnetic radiation positioned above said sample is "above" only in the sense of laboratory coordinates. That is, rotating the ellipsometer or the like system so that the second source is not above the sample in laboratory coordinates does not remove the system from the Claims as said terminology is used herein.

It is also noted that the disclosed invention can operate at at least one wavelength in at least one wavelength range, such as:

RADIO;
MICROWAVE;
FIR;
IR;
NIR-VIS-NUV;

UV;
DUV;
VUV;
EUV;
XRAY.

The described invention can be practiced in any type of reflectometer or ellipsometer, (eg. Rotating Polarizer, Rotating Analyzer, Rotating Compensator, Modulation Element).

Finally, in the foregoing disclosure it is mentioned that the methods recited can further comprise using signals developed by one or more alignment detector elements as sample characterizing data along with, or in place of that provided by the data detector. This is because said signals are acquired from a beam that has interacted with a sample. Taking this concept to the limit, the method of characterizing a sample utilizing a beam of electromagnetic radiation can then eliminate the separate data detector altogether.

That is, the alignment detector can be applied to provide not only (AOI) and (POI) correction data, but to also provide sample charactizing data, such as that which allows determining PSI and DELTA of the sample. The approach is not prefered however, as the configuration of an alignment detector is typically not optimum for receiving sample characterizing data.

The disclosed invention will be better understood by reference to the Detailed description Section, in conjunction with the Drawings.

SUMMARY OF THE INVENTION

A primary purpose and/or objective of the methods disclosed herein is to teach a method for enabling detection and correction of errors in (AOI) and/or POI in analysis of sample characterizing data produced by material system investigation systems such as ellipsometers, polarimeters, reflectometers, spectrophotometers and the like systems.

It is another purpose and/or objective of the methods disclosed herein is to teach construction of a Data Set by, while changing the orientation of said alignment sample through a multiplicity of known angle-of-incidence (AOI) and plane-of-incidence (POI) combinations, obtaining a data set which corresponds to signals from each from said multi-element alignment detector. Said "Tabulated" Data Set which identifies combinations of Alignment Detector Elements outputs to an (AOI) and (POI) combination can be applied to compensate (AOI) and/or (POI) values during analysis of Sample Characterizing Data obtained from a Data Detector.

It is another purpose and/or objective of the methods disclosed herein is to disclose using alignment detector signals instead of or along with data from a data detector to characterize said sample, in additon to using signals from said alignment detector to provide alignment data regarding said sample.

Other purposes and/or objectives will become obvious from a reading of the Specification and Claims.

BRIEF DESCRIPTION OF THE DRAWINGS

Figs. 1a and 1b show multiple-element detectors (AD).

Figs. 2 and 3 demonstrate an approach to setting an angle-of-incidence using a Fig 1a type multiple element detector.

Fig. 4 demonstrates a multiple element detector positioned vertically above a sample (S).

Fig. 5 shows use of a multiple element detector (AD) through which a reflected electromagnetic beam (LB) passes before entering a detector (DET).

Fig. 6 shows a beam splitter (BS) in a reflected electromagnetic beam (LB) passes before entering a detector (DET), which beam splitter directs a portion of the electromagnetic beam into a Fig. 1b type multiple element detector.

Fig. 7 shows a multiple element detector (AD) in a reflected electromagnetic beam (LB) passes before entering a detector (DET).

Fig. 8 shows a combined system comprising three multiple element detectors shown separately in Figs. 4, 6 and 7.

Fig. 9 demonstrates use of a multiple element detector (AD) which, via a beam splitter (BS), receives a focused portion of an electromagnetic beam (LB) reflected from a sample (S), the remainder of said electromagnetic beam (LB) is focused into an accessible end of a fiber optic (FO).

<u>DETAILED DESCRIPTION</u>

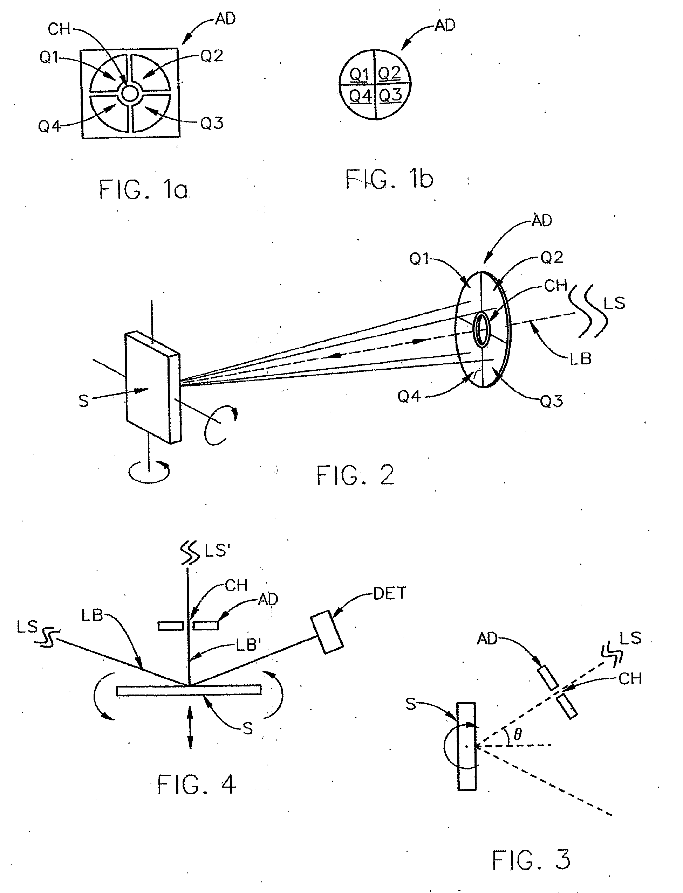

Figs. 1a and 1b show multiple-element detectors (AD). Fig. 1a shows a Quad-Detector with four detector regions (Q1), (Q2), (Q3) and (Q4). Note also the presence of a central hole (CH). Fig. 1b shows a Quad-detector (AD) with four detector regions (Q1), (Q2), (Q3) and (Q4) which are more closely packed and no central hole is present.

Figs. 2 and 3 demonstrate an approach to setting an angle-of-incidence using a Fig. 1a type multiple element detector. Said approach involves providing a beam of electromagnetic radiation (LB) from Source (LS), which beam (LB) is caused to pass through central hole (CH) in multiple element detector (AD) and reflect from Sample (S). Sample (S) is rotated so that equal amounts of electromagnetic radiation reflect to the four detector regions (Q1), (Q2), (Q3) and (Q4). Once the beam (LB) is thus caused to be oriented perpendicular to the surface of the Sample (S) it is rotated through a known angle ($\theta$) as shown in Fig. 3, thereby providing a known angle of incidence of ($\theta$) to the Sample (S).

Fig. 4 demonstrates a Fig. 1a type multiple element detector (AD) positioned vertically above a sample (S). In use the Sample a beam (LB') of electromagnetic radiation is provided by Source (LS') and Sample (S) is rotated around orthogonal axes so that the various detector elements in the Fig. 1a type multiple element detector (AD) receive substantially equal amounts of reflected radiation, thereby showing that the surface of the Sample, at the point the beam (LB') is oriented perpendicular to said beam (LB'). This approach has the benefit that vertical motion of the Sample (S) has no effect on the alignment process of the Sample (S).

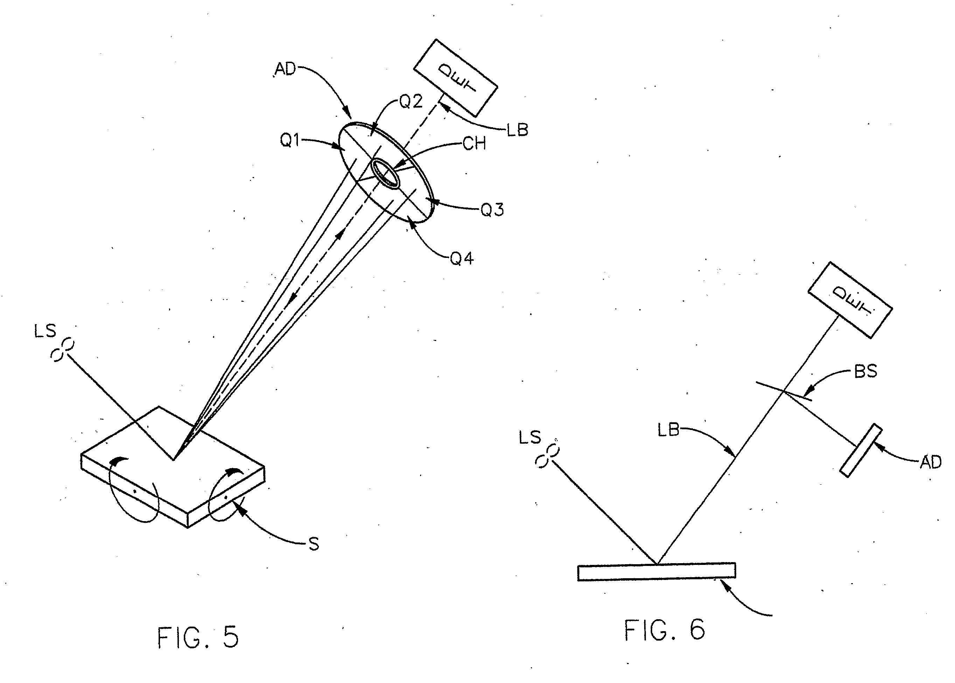

Fig. 5 shows use of a multiple element detector (AD) through which a reflected electromagnetic beam (LB) passes before entering a detector (DET). When Sample (S) is properly aligned so that beam (LB) proceeds to Detector (DET) as desired, the detector elements (Q1), (Q2), (Q3) and (Q4) each provide substantially the same output.

Fig. 6 shows a beam splitter (BS) in a reflected electromagnetic beam (LB) passes before entering a detector (DET), which beam splitter directs a portion of the electromagnetic beam into a Fig. 1b type multiple element detector. Again, when Sample (S) is properly aligned so that a portion of beam (LB) proceeds to Detector (DET) as desired, the detector elements (Q1), (Q2), (Q3) and (Q4) each provide substantially the same output.

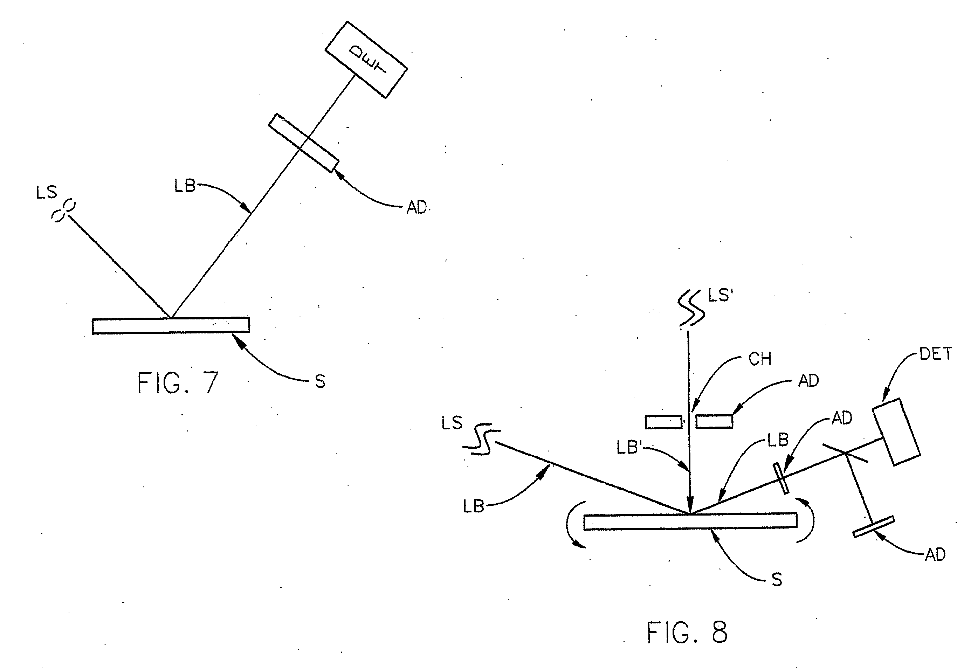

Fig. 7 shows a multiple element detector (AD) in a reflected electromagnetic beam (LB) passes before entering a detector (DET). Fig. 7 is basically a side view of the situation shown in perspective in Fig. 5.

Fig. 8 shows a combined system comprising three multiple element detectors each identified as (AD), and which are shown separately in Figs. 4, 6 and 7. With all such multiple element detectors (AD) are available output from each can be utilized or not as is found to be optimum.

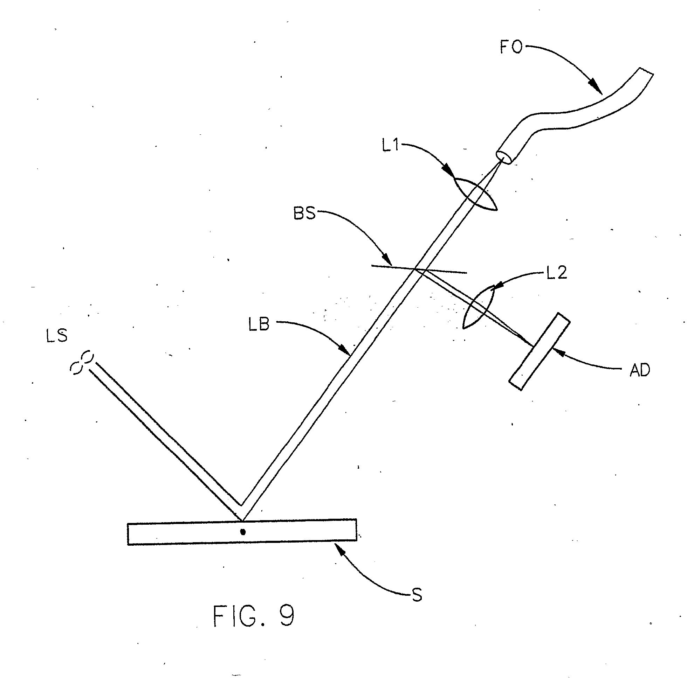

Fig. 9 demonstrates use of a multiple element detector (AD) which is not part of the present invention. The multiple element detector (AD) receives via a beam splitter (BS), a focused portion of an electromagnetic beam (LB) reflected from a sample (S), the remainder of said electromagnetic beam (LB) is focused into an accessible end of a fiber optic (FO). After calibration to properly coordinated equal output from each of the alignment detector elements (Q1), (Q2), (Q3) and (Q4) to proper placement of focus point by Lens (L1), it should be appreciated that monitoring output of the alignment detector elements (Q1), (Q2), (Q3) and (Q4) and response to change therein can be used to keep the beam focused by Lens (L1) properly positioned on the accessible end of the Fiber Optic (FO). Further, after the initial orienting of a sample via physical motion, signals developed by alignment detector elements (Q1), (Q2), (Q3) and (Q4) can be applied to compensate minor deviations of (AOI) and (POI) from intended values. Note also that a Lens (L2) is present to focus the portion of the beam (LB) which is directed thereat by Beam Splitter (BS). It is noted that a similar arrangement could be substituted for the Alignment Detectors (AD) shown in Figs. 4 and 8.

As an example not part of the present invention, it is also possible to use a signal generated by a multiple element detector (AD) to adjust the vertical height of a Sample (S), as the system in Fig. 4 can be alternatively interpreted to show by realizing that if the sample height is not appropriate to direct the reflected beam onto the multiple element alignment detector elements (Q1), (Q2), (Q3) and (Q4), no signal will be developed thereby.

Having hereby disclosed the subject matter of the present invention, it should be obvious that many modifications, substitutions, and variations of the present invention are possible within the scope of the appended claims.

**Claims**

1. A method of characterizing a sample utilizing a beam of electromagnetic radiation, comprising the steps of:

   a) providing an alignment sample (S), a source of electromagnetic radiation (LS), a multi-element alignment detector (AD) and a data detector (DET);
   b) orienting the alignment sample such that at least a portion of a beam of electromagnetic radiation (LB) produced by said source is caused to obliquely impinge thereupon, reflect therefrom and enter the data detector at a base angle-of-incidence and plane-of-incidence;

c) causing a portion of the beam of electromagnetic radiation reflected from the alignment sample to enter said multi-element alignment detector, and monitoring signals from each element of said multi-element alignment detector;

d) removing said alignment sample and placing a test sample in its place;

e) obtaining data from said test sample by causing electromagnetic radiation from said source to reflect from said test sample and enter said data detector while monitoring the output of each element (Q1, Q2, Q3, Q4) in said multi-element alignment detector;

**characterized in that** the method further comprises the step of

f) characterizing said test sample by analyzing the data obtained from the data detector in step e), in combination with signals from elements of the multi-element alignment detector in step e) which identify differences from signals determined therefrom in step c), said difference signals serving to provide information to compensate offsets in intended and actually realized angle-of-incidence and plane-of-incidence of the test sample as compared to the base angle-of-incidence and plane-of-incidence of the alignment sample achieved in step b).

2. A method of characterizing a sample as claimed in Claim 1, further comprising:

causing a portion of the beam of electromagnetic radiation (LB) reflected from the alignment sample (S) to enter said multi-element alignment detector (AD), and monitoring signals from each element (Q1, Q2, Q3, Q4) of said multi-element alignment detector;

said method using signals obtained from said multi-element alignment detector either upon reflection from the alignment sample and/or from the test sample, as data along with the output of said data detector (DET) from the test sample, in the test sample characterization.

3. A method of characterizing a sample as claimed in Claim 1, further comprising:

causing a portion of the beam of electromagnetic radiation (LB) reflected from the alignment sample (S) to enter the multi-element alignment detector (AD), and positioning said multi-element alignment detector so that signals are developed by each of its elements (Q1, Q2, Q3, Q4);

while changing the orientation of said alignment sample through a multiplicity of known angle-of-incidence and plane-of-incidence combinations, obtaining a data set which corresponds to signals from each from said multi-element detector;

upon placing the test sample in place of the alignment sample, orienting the test sample generally as was the alignment sample;

characterizing said test sample by analyzing the data obtained from the data detector (DET) in combination with correction parameters based on signals from the elements of the multi-element detector which identify what angle-of-incidence and plane-of-incidence combination actually characterizes the test sample orientation, said correction parameters being based on data in the data set.

4. A method as claimed in any preceding claim, in which the signals developed by each of the elements (Q1, Q2, Q3, Q4) of the multi-element alignment detector (AD) are caused to be equal.

5. A method as claimed in any preceding claim, wherein a portion of the beam of electromagnetic radiation (LB) reflected from a sample (S) is caused to enter the multi-element alignment detector (AD) by way of a beam splitter (BS).

6. A method as claimed in any preceding claim, wherein signals developed by each of the elements (Q1, Q2, Q3, Q4) of said multi-element alignment detector (AD) are used to effect change in the orientation of the sample.

7. A method as claimed in any preceding claim, further comprising:

providing a second source (LS') of a beam of electromagnetic radiation positioned above said alignment sample (S), and a second multiple element alignment detector (AD), each element of said second multiple element alignment detector being positioned to receive substantially equal amounts of a beam of electromagnetic radiation provided by said second source thereof after reflecting from said alignment sample when it is oriented perpendicular to said beam of electromagnetic radiation;

causing said second source of electromagnetic radiation to provide a beam of electromagnetic radiation (LB') which is directed toward said alignment sample; and

while changing the orientation of said alignment sample through a multiplicity of known angle-of-incidence and plane-of-incidence combinations, obtaining a data set which corresponds to signals from each from said multi-element alignment detectors.

8. A method as claimed in Claim 7, in which the second alignment detector (AD) has a centrally oriented hole (CH) therein through which said beam of electromagnetic radiation (LB') from said second source (LS') passes before impinging on said alignment sample (S).

9. A method as claimed in Claim 7 or Claim 8, in which the second detector (AD) receives electromagnetic radiation from a beam splitter (BS) which directs a part of the beam of electromagnetic radiation from said second source (LS') thereinto which the remainder thereof impinges on said alignment sample (S).

10. A method as claimed in any of Claims 7 to 9, further comprising utilizing said data set to compensate offsets in intended and actually realised angle-of incidence and plane-of-incidence of the test sample as compared to the base angle-of-incidence and plane-of-incidence of the alignment sample (S).

11. A method as claimed in any of Claims 7 to 10, further comprising providing a beam splitter (BS) such that a portion of the beam of electromagnetic radiation (LB) produced by said first source (LS), which is caused to obliquely impinge upon said sample (S), reflect therefrom and enter said data detector (DET) is diverted into a second multiple element alignment detector (AD) and further, utilizing signals developed by the elements of said second multiple element alignment detector to compensate offsets in intended and actually realized angle-of incidence and plane-of-incidence of the test sample.

**Patentansprüche**

1. Verfahren zur Charakterisierung einer Probe unter der Verwendung eines Strahls elektromagnetischer Strahlung, umfassend die folgenden Schritte:

a) Bereitstellen einer Justierprobe (S), einer Quelle elektromagnetischer Strahlung (LS), eines Mehrelement-Justierdetektors (AD) und eines Datendetektors (DET);
b) Ausrichten der Justierprobe, sodass mindestens ein Teil eines Strahls elektromagnetischer Strahlung (LB), der von der Quelle erzeugt wird, dazu gebracht wird, schräg darauf aufzutreffen, davon reflektiert zu werden und in den Datendetektor in einem grundlegenden Einfallswinkel und einer grundlegenden Einfallsebene einzutreten;
c) Veranlassen, dass ein Teil des Strahls elektromagnetischer Strahlung, der von der Justierprobe reflektiert wird, in den Mehrelement-Justierdetektor eintritt und Überwachen von Signalen von jedem Element des Mehrelement-Justierdetektors;
d) Entfernen der Justierprobe und Platzieren einer Testprobe an ihrer Stelle;
e) Erhalten von Daten von der Testprobe, indem elektromagnetische Strahlung von der Quelle dazu gebracht wird, von der Testprobe reflektiert zu werden und in den Datendetektor einzutreten, während die Ausgabe jedes Elements (Q1, Q2, Q3, Q4) in dem Mehrelement-Justierdetektor überwacht wird;
**dadurch gekennzeichnet, dass** das Verfahren ferner den folgenden Schritt umfasst
f) Charakterisieren der Testprobe durch Analyse der von dem Datendetektor in Schritt e) erhaltenen Daten, in Kombination mit Signalen von Elementen des Mehrelement-Justierdetektors in Schritt e), welche Unterschiede von Signalen identifizieren, die davon in Schritt c) bestimmt wurden, wobei die Differenzsignale dazu dienen, Informationen bereitzustellen, um Verschiebungen hinsichtlich beabsichtigter und tatsächlich realisierter Einfallswinkel und Einfallsebenen der Testprobe im Vergleich zu dem grundlegenden Einfallswinkel und der grundlegenden Einfallsebene der Justierprobe, die in Schritt b) erreicht wurden, zu kompensieren.

2. Verfahren zur Charakterisierung einer Probe nach Anspruch 1, ferner umfassend:

Veranlassen, dass ein Teil des Strahls elektromagnetischer Strahlung (LB), der von der Justierprobe (S) reflektiert wird, in den Mehrelement-Justierdetektor (AD) eintritt und Überwachen von Signalen von jedem Element (Q1, Q2, Q3, Q4) des Mehrelement-Justierdetektors;
wobei das Verfahren Signale einsetzt, die von dem Mehrelement-Justierdetektor entweder nach einer Reflektion von der Justierprobe und/oder von der Testprobe als Daten zusammen mit der Ausgabe des Datendetektors (DET) von der Testprobe bei der Testprobencharakterisierung erhalten werden.

**3.** Verfahren zur Charakterisierung einer Probe nach Anspruch 1, ferner umfassend:

Veranlassen, dass ein Teil des Strahls elektromagnetischer Strahlung (LB), der von der Justierprobe (S) reflektiert wird, in den Mehrelement-Justierdetektor (AD) eintritt und Positionieren des Mehrelement-Justierdetektors, sodass von jedem seiner Elemente (Q1, Q2, Q3, Q4) Signale erzeugt werden;
während die Ausrichtung der Justierprobe durch eine Vielzahl von bekannten Einfallswinkel- und Einfallsebenen-Kombinationen verändert wird, Erhalten eines Datensatzes, der Signalen von jedem aus dem Mehrelement-Detektor entspricht;
nachdem die Testprobe anstelle der Justierprobe platziert wurde, Ausrichten der Testprobe im Allgemeinen wie die Justierprobe;
Charakterisieren der Testprobe durch Analyse der von dem Datendetektor (DET) erhaltenen Daten in Kombination mit Korrekturparametern auf der Grundlage von Signalen von den Elementen des Mehrelement-Detektors, die identifizieren, welche Einfallswinkel- und Einfallsebenen-Kombination die Ausrichtung der Testprobe tatsächlich charakterisiert, wobei die Korrekturparameter auf Daten in dem Datensatz basieren.

**4.** Verfahren nach einem vorhergehenden Anspruch, wobei die von jedem der Elemente (Q1, Q2, Q3, Q4) des Mehrelement-Detektors (AD) erzeugten Signale, dazu gebracht werden, gleich zu sein.

**5.** Verfahren nach einem vorhergehenden Anspruch, wobei ein Teil des Strahls elektromagnetischer Strahlung (LB), der von einer Probe (S) reflektiert wird, dazu gebracht wird, in den Mehrelement-Justierdetektor (AD) mittels eines Strahlteilers (BS) einzutreten.

**6.** Verfahren nach einem vorhergehenden Anspruch, wobei Signale, die von jedem der Elemente (Q1, Q2, Q3, Q4) des Mehrelement-Justierdetektors (AD) erzeugt werden, dazu verwendet werden, um eine Veränderung hinsichtlich der Ausrichtung der Probe zu bewirken.

**7.** Verfahren nach einem vorhergehenden Anspruch, ferner umfassend:

Bereitstellen einer zweiten Quelle (LS') eines Strahls elektromagnetischer Strahlung, die über der Justierprobe (S) positioniert ist und eines zweiten Mehrelement-Justierdetektors (AD), wobei jedes Element des zweiten Mehrelement-Justierdetektors positioniert ist, um im Wesentlichen gleiche Mengen eines Strahls elektromagnetischer Strahlung, der von der zweiten Quelle davon bereitgestellt wird, nach der Reflektion von der Justierprobe aufzunehmen, wenn sie senkrecht zu dem Strahl elektromagnetischer Strahlung ausgerichtet ist;
Veranlassen, dass die zweite Quelle elektromagnetischer Strahlung einen Strahl elektromagnetischer Strahlung (LB') bereitstellt, der auf die Justierprobe gerichtet ist; und
während die Ausrichtung der Justierprobe durch eine Vielzahl von bekannten Einfallswinkel- und Einfallsebenen-Kombinationen verändert wird, Erhalten eines Datensatzes, der Signalen von jedem der Mehrelement-Justierdetektoren entspricht.

**8.** Verfahren nach Anspruch 7, wobei der zweite Justierdetektor (AD) darin eine zentral ausgerichtete Öffnung (CH) aufweist, durch die der Strahl elektromagnetischer Strahlung (LB') von der zweiten Quelle (LS') hindurchgeht, bevor er auf die Justierprobe (S) auftrifft.

**9.** Verfahren nach Anspruch 7 oder Anspruch 8, wobei der zweite Detektor (AD) elektromagnetische Strahlung von einem Strahlteiler (BS) aufnimmt, welcher einen Teil des Strahls elektromagnetischer Strahlung von der zweiten Quelle (LS') dort hinein leitet, wobei der Rest davon auf die Justierprobe (S) auftrifft.

**10.** Verfahren nach einem der Ansprüche 7 bis 9, ferner umfassend die Verwendung des Datensatzes, um Verschiebungen hinsichtlich beabsichtigter und tatsächlich realisierter Einfallswinkel und Einfallsebenen der Testprobe im Vergleich zu dem grundlegenden Einfallswinkel und der grundlegenden Einfallsebene der Justierprobe (S) zu kompensieren.

**11.** Verfahren nach einem der Ansprüche 7 bis 10, ferner umfassend das Bereitstellen eines Strahlteilers (BS), sodass ein Teil des Strahls elektromagnetischer Strahlung (LB), der von der ersten Quelle (LS) erzeugt wird und dazu gebracht wird, schräg auf die Probe (S) aufzutreffen, davon reflektiert zu werden und in den Datendetektor (DET) einzutreten, in einen zweiten Mehrelement-Justierdetektor (AD) umgeleitet wird und ferner das Verwenden von Signalen, die von den Elementen des zweiten Mehrelement-Justierdetektors erzeugt wurden, um Verschiebungen hinsichtlich beabsichtigter und tatsächlich realisierter Einfallswinkel und Einfallsebenen der Testprobe zu kompensieren.

**Revendications**

**1.** Une méthode de caractérisation d'un échantillon utilisant un faisceau de rayonnement électromagnétique, comprenant les étapes suivantes :

a) fourniture d'un échantillon d'alignement (S), une source de rayonnement électromagnétique (LS), un détecteur d'alignement (AD) multi-élémentaire, et un détecteur de données (DET) ;
b) orientation de l'échantillon d'alignement de sorte qu'au moins une partie du rayonnement électromagnétique (LB) produit par ladite source vient le heurter en oblique, se reflète de celui-ci, et entre dans le détecteur de données à un angle d'incidence et un plan d'incidence de base ;
c) entraînement de l'entrée d'une partie du faisceau du rayonnement électromagnétique reflété de l'échantillon d'alignement dans le détecteur d'alignement multi-élémentaire, et contrôle de signaux émis par chaque élément dudit détecteur d'alignement multi-élémentaire ;
d) enlèvement dudit échantillon d'alignement, et sa substitution par un échantillon d'essai ;
e) obtention de données provenant dudit échantillon d'alignement en donnant lieu à la réflexion dudit échantillon d'essai du rayonnement électromagnétique provenant de ladite source, et à son entrée dans ledit détecteur de données, tout en contrôlant les données produites par chaque élément (Q1, Q2, Q3, Q4) dans ledit détecteur d'alignement multi-élémentaire ;
**caractérisée en ce que** la méthode comprend en outre l'étape de
f) caractérisation dudit échantillon d'essai par l'analyse des données obtenues du détecteur de données au point e), conjointement avec des signaux d'éléments du détecteur d'alignement multi-élémentaire au point e), identifiant des différences avec des signaux déterminés de ceux-ci au point c), lesdits signaux de différence servant à fournir des informations pour compenser des déports relatifs aux angle d'incidence et plan d'incidence de l'échantillon d'essai, prévus et réels de l'échantillon d'essai, par rapport aux angle d'incidence et plan d'incidence de base de l'échantillon d'alignement réalisés au point b).

**2.** Une méthode de caractérisation d'un échantillon selon la revendication 1, comprenant en outre le fait de causer l'entrée, par une partie du faisceau de rayonnement électromagnétique (LB) réfléchi par l'échantillon d'alignement (S), dans ledit détecteur d'alignement multi-élémentaire (AD) et contrôler des signaux de chaque élément (Q1, Q2, Q3, Q4) dudit détecteur d'alignement multi-élémentaire ;
ladite méthode utilisant des signaux obtenus dudit détecteur d'alignement multi-élémentaire soit par réflexion de l'échantillon d'alignement et/ou de l'échantillon d'essai en tant que données, conjointement avec la sortie dudit détecteur de données (DET) d'après l'échantillon d'essai, dans les caractéristiques de l'échantillon d'essai.

**3.** Une méthode de caractérisation d'un échantillon selon la revendication 1, comprenant en outre le fait de causer l'introduction, dans le détecteur d'alignement multi-élémentaire (AD), d'une partie du faisceau de rayonnement électromagnétique (LB) réfléchi par l'échantillon d'alignement (S), et le positionnement dudit détecteur d'alignement multi-élémentaire de façon à obtenir le développement de signaux par chacun de ses éléments (Q1, Q2, Q3, Q4) ;
l'obtention, tout en modifiant l'orientation dudit échantillon d'alignement par le biais d'une série de combinaisons connues d'angle d'incidence et de plan d'incidence, d'un jeu de données correspondant à des signaux provenant de chaque élément dudit détecteur multi-élémentaire ;
l'orientation, lors du placement de l'échantillon d'alignement à la place de l'échantillon d'essai, de l'échantillon d'essai d'une manière générale conformément à celle de l'échantillon d'alignement ;
la caractérisation dudit échantillon d'essai par l'analyse des données obtenues avec le détecteur de données (DET) conjointement avec des paramètres de correction basés sur des signaux provenant des éléments du détecteur multi-élémentaire identifiant quelle combinaison d'angle d'incidence et de plan d'incidence caractérise l'orientation de l'échantillon d'essai, lesdits paramètres de correction étant basés sur des données contenues dans le jeu de données.

**4.** Une méthode selon une quelconque des revendications précédentes, dans laquelle on fait en sorte que les signaux développés par chacun des éléments (Q1, Q2, Q3, Q4) du détecteur d'alignement multi-élémentaire (AD) sont égaux.

**5.** Une méthode selon une quelconque des revendications précédentes, dans laquelle on cause l'entrée d'une partie du faisceau de rayonnement électromagnétique (LB) reflété par un échantillon (S) dans le détecteur d'alignement multi-élémentaire (AD) par le biais d'un séparateur de faisceau (BS).

6. Une méthode selon une quelconque des revendications précédentes, dans laquelle des faisceaux développés par chacun des éléments (Q1, Q2, Q3, Q4) dudit détecteur d'alignement multi-élémentaire (AD) sont utilisés pour réaliser un changement d'orientation de l'échantillon.

7. Une méthode selon une quelconque des revendications précédentes, dans laquelle ont également lieu :

la fourniture d'une deuxième source (LS') d'un faisceau de rayonnement électromagnétique positionné au-dessus dudit échantillon d'alignement (S) et d'un deuxième détecteur d'alignement multi-élémentaire (AD), chaque élément dudit deuxième détecteur d'alignement multi-élémentaire étant positionné pour recevoir des quantités substantiellement égales d'un faisceau de rayonnement électromagnétique apporté par ladite deuxième source de ce dernier après sa réflexion dudit échantillon d'alignement lorsqu'il est orienté perpendiculairement audit faisceau de rayonnement électromagnétique ;
la fourniture, par ladite deuxième source de rayonnement électromagnétique, d'un faisceau de rayonnement électromagnétique (LB') dirigé vers ledit échantillon d'alignement ;
et
tout en modifiant l'orientation dudit échantillon d'alignement par le biais d'une série de combinaisons connues d'angles d'incidence et de plans d'incidence de base, l'obtention d'un jeu de données correspondant à des signaux provenant de chacun desdits détecteurs d'alignement multi-élémentaire.

8. Une méthode selon la revendication 7, dans laquelle le deuxième détecteur d'alignement (AD) possède un trou à orientation centrale (CH) à travers lequel passe ledit faisceau de rayonnement électromagnétique (LB') provenant de ladite deuxième source (LS') avant d'aller heurter ledit échantillon d'alignement (S).

9. Une méthode selon la revendication 7 ou la revendication 8, dans laquelle le deuxième détecteur d'alignement (AD) reçoit un rayonnement électromagnétique d'un séparateur de faisceau (BS), qui dirige une partie du faisceau de rayonnement électromagnétique provenant de ladite deuxième source (LS') dans celui-ci, le restant venant heurter ledit échantillon d'alignement (S).

10. Une méthode selon une quelconque des revendications 7 à 9, comprenant en outre l'utilisation dudit jeu de données pour compenser des déports dans l'angle d'incidence et le plan d'incidence prévus et réels de l'échantillon d'essai, par rapport aux angle d'incidence et plan d'incidence de base de l'échantillon d'alignement (S).

11. Une méthode selon une quelconque des revendications 7 à 10, comprenant en outre la présence d'un séparateur de faisceau (BS), de sorte qu'une partie du faisceau de rayonnement électromagnétique (LB) produit par ladite première source (LS), qui est forcée de venir heurter de façon oblique ledit échantillon (S), se refléter de celui-ci, et entrer dans ledit détecteur de données (DET), est dévié dans un deuxième détecteur d'alignement multi-élémentaire (AD), et utilisant en outre des signaux développés par les éléments dudit deuxième détecteur d'alignement multi-élémentaire pour compenser des déports dans l'angle d'incidence et le plan d'incidence prévus et réels de l'échantillon d'essai.

FIG. 1a

FIG. 1b

FIG. 2

FIG. 4

FIG. 3

FIG. 5

FIG. 6

EP 2 698 598 B1

FIG. 7

FIG. 8

EP 2 698 598 B1

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 5872630 A, Johs
- WO 5582646 A, Woollam
- WO 5373359 A, Woollam
- WO 5666201 A, Johs
- WO 5521706 A, Green
- WO 5504582 A, Johs
- WO 5329357 A, Bernoux
- WO 5343293 A, Berger
- WO 4672196 A, Canino
- WO 4647207 A, Bjork
- WO 5412473 A, Rosencwaig
- EP 1034413 B1

- WO 7088448 A, Hahn
- WO 4558949 A, Uehara
- WO 5801835 A, Mizutani
- WO 5166516 A, Kajimura
- WO 6292259 A, Fossey
- WO 4585348 A, Chastang
- WO 6969863 A, Foth
- WO 4902900 A, Kamiya
- WO 3880524 A, Dill
- EP 1034413 A, Hahn
- US 6091499 A

### Non-patent literature cited in the description

- **COLLINS.** Automatic Rotating Element Ellipsometers: Calibration, Operation and Real-Time Applications. *Rev. Sci. Instrum,* 1990, vol. 61 (8